# EUROPEAN PATENT SPECIFICATION

(11) **EP 2 048 051 B1**
(45) Date of publication and mention of the grant of the patent: **02.05.2012**
(21) Application number: 08017819.7
(22) Date of filing: 10.10.2008
(51) Int. Cl.: B60T 8/32, B60T 8/36, B62L 3/02

(54) **Straddle-type vehicle**
Grätschsitz-Fahrzeug
Véhicule de type à enfourcher

(30) Priority: 10.10.2007 JP 2007264950
(43) Date of publication of application: 15.04.2009
(73) Proprietor: Yamaha Hatsudoki Kabushiki Kaisha, Shizuoka-ken Shizuoka 438-8501 (JP)
(72) Inventor: Toyosato, Tetsuo, Iwata-shi Shizuoka-ken 438-8501 (JP); Shinsho, Masami, Iwata-shi Shizuoka-ken 438-8501 (JP)
(74) Representative: Grünecker, Kinkeldey, Stockmair & Schwanhäusser

(56) References cited:
- EP-A- 0 624 498
- EP-A- 1 679 243
- EP-A- 1 820 710
- JP-A- 5 105 064
- JP-A- 2005 059 629
- JP-A- 2007 055 297
- JP-A- 2007 076 555

## Description

The present invention relates to a straddle-type vehicle according to the preamble of independent claim 1. Such a straddle-type vehicle can be taken from the prior art document EP 1 679 243 A1.

For example, some motorcycles mount thereon an anti-lock braking system provided with a hydraulic control unit, which makes supplying of hydraulic pressure to a front wheel and a rear wheel intermittent when a wheel or wheels lock at the time of braking. For example, JP-A-2005-59629 proposes a construction, in which the hydraulic control unit is arranged rearwardly of an air cleaner connected to an engine and mounted to a seat rail with an elastic member therebetween.

By the way, with the conventional construction described above, the hydraulic control unit is arranged rearwardly of the air cleaner arranged rearwardly of the engine. Therefore, the hydraulic control unit being a heavy item is positioned away from and rearwardly of a center of gravity of a vehicle body, thus causing a fear that a weight balance of a vehicle body is affected. The invention has been thought of in view of the conventional situation.

It is an objective of the present invention to provide a straddle-type vehicle as indicated above capable of making a weight balance of a vehicle body favorable in the case where a hydraulic control unit is arranged on a body frame.

According to the present invention, said objective is solved by a straddle-type vehicle having the features of independent claim 1. Preferred embodiments are laid down in the dependent claims.

Accordingly, it is provided a straddle-type vehicle comprising: a body frame including a front frame and a rear frame extending in vehicle moving direction rearwardly from the front frame; and a hydraulic brake device configured to brake at least one wheel of the straddle-type vehicle, the hydraulic brake device including a hydraulic control unit that is configured to intermittently supply hydraulic pressure to the wheel when the wheel is locked upon braking, wherein the hydraulic control unit is arranged in the vicinity of a connection of the front frame and the rear frame of the body frame.

Accordingly, the hydraulic control unit is arranged in the vicinity of a connection of the front frame and the rear frame of the body frame, so that the hydraulic control unit being a heavy item will be positioned near to a center of gravity of a vehicle body, thus enabling making a weight balance of the vehicle body favorable.

Preferably, the front frame extends in vehicle moving direction rearwardly and obliquely downward to a substantially central portion thereof in a longitudinal direction from a front end of the body frame, and/or the rear frame extends rearward from an intermediate portion of the front frame.

Further, preferably a front wheel is supported on the body frame to be made steerable left and right, a rear wheel is supported on the body frame to be able to swing vertically, and the hydraulic brake device is configured to brake the front wheel and the rear wheel.

The fuel tank is arranged in vehicle moving direction rearwardly of the hydraulic control unit.

According to a preferred embodiment, the rear frame includes a first rear frame member arranged on one side in vehicle width direction and a second rear frame member arranged on the other side, and, preferably, the fuel tank is arranged between the first rear frame member and the second rear frame member as viewed in plan view.

The battery is arranged in vehicle moving direction forwardly of the hydraulic control unit.

Further, preferably the front frame includes a first front frame member arranged on one side in vehicle width direction and a second front frame member arranged on the other side.

Still further, preferably the battery is arranged between the first front frame member and the second front frame member.

According to another preferred embodiment, the hydraulic control unit is mounted to the first front frame member and/or the second frame member, and, preferably, a cross member connects the first front frame member and the second front frame member, wherein the hydraulic control unit is preferably mounted to the first front frame member and the second front frame member above the cross member.

Preferably, the hydraulic control unit is mounted to the body frame by means of at least one elastic member.

Further, preferably the hydraulic control unit includes a unit body configured to make hydraulic pressure intermittent, and a holding member holding the unit body, the holding member being mounted to the body frame, preferably by means of the at least one elastic member.

Still further, preferably the elastic member includes a first elastic member configured to restrict upward movement of the hydraulic control unit, preferably of the holding member, and/or a second elastic member configured to restrict lower movement of the hydraulic control unit, preferably of the holding member.

Yet further still, preferably the second elastic member is structured to restrict movement of the hydraulic control unit, preferably of the holding member in vehicle width direction.

Preferably, the elastic member clamps at least one hydraulic pipe which is connected to the hydraulic control unit, preferably connected to the unit body.

Further, preferably the hydraulic brake device includes a front-wheel hydraulic pressure pipe for communication between the hydraulic control unit and a front-wheel brake caliper, and a rear-wheel hydraulic pressure pipe for communication between the hydraulic control unit and a rear-wheel brake caliper, wherein the front-wheel hydraulic pressure pipe is substantially of the same length or longer than the rear-wheel hydraulic pressure pipe.

In the following, the present invention is explained in greater detail by means of embodiments thereof in conjunction with the accompanying drawings, wherein:
- Fig. 1: is a side view showing a motorcycle according to an embodiment;
- Fig. 2: is a side view showing a front frame of the motorcycle;
- Fig. 3: is a side view showing a hydraulic control unit arranged on the front frame;
- Fig. 4: is a rear view showing the hydraulic control unit;
- Fig. 5: is a cross sectional view (cross sectional view taken along the line V-V in Fig. 3) showing the hydraulic control unit;
- Fig. 6: is a cross sectional view (cross sectional view taken along the line VI-VI in Fig. 4) showing the hydraulic control unit; and
- Fig. 7: is a cross sectional view (cross sectional view taken along the line VII-VII in Fig. 4) showing the hydraulic control unit.

Among others, the following reference signs are used in the figures:
- 1:: motorcycle (straddle-type vehicle)
- 2:: body frame
- 2a:: head pipe
- 2c:: front frame
- 2d:: first front frame member
- 2e:: second front frame member
- 4:: front wheel
- 18:: rear wheel
- 20:: fuel tank
- 22:: hydraulic brake device
- 22a:: hydraulic control unit
- 26:: rear frame
- 26a:: first rear frame member
- 26b:: second rear frame member
- 30:: battery
- 35:: front-wheel brake caliper
- 36:: rear-wheel brake caliper
- 37a:: first front-wheel hydraulic pressure secondary pipe
- 37b:: second front-wheel hydraulic pressure secondary pipe
- 38a:: first rear-wheel hydraulic pressure secondary pipe
- 38b:: second rear-wheel hydraulic pressure secondary pipe
- 40:: unit body
- 41:: holding member
- 45:: elastic member
- 46:: upper elastic member
- 47:: lower elastic member
- G:: center of gravity of vehicle body

An embodiment will be described below with reference to the accompanying drawings.

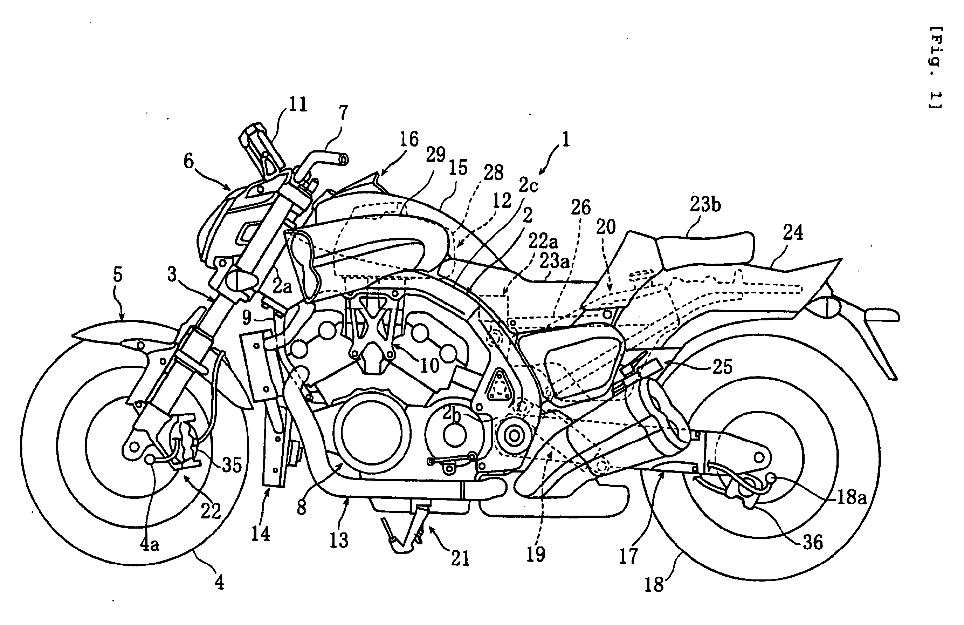

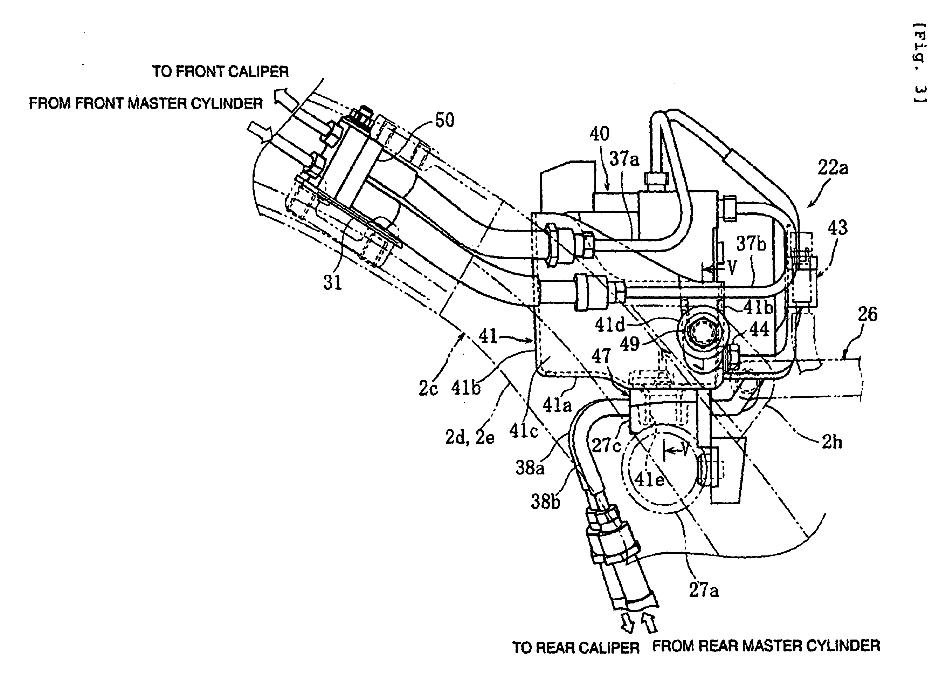

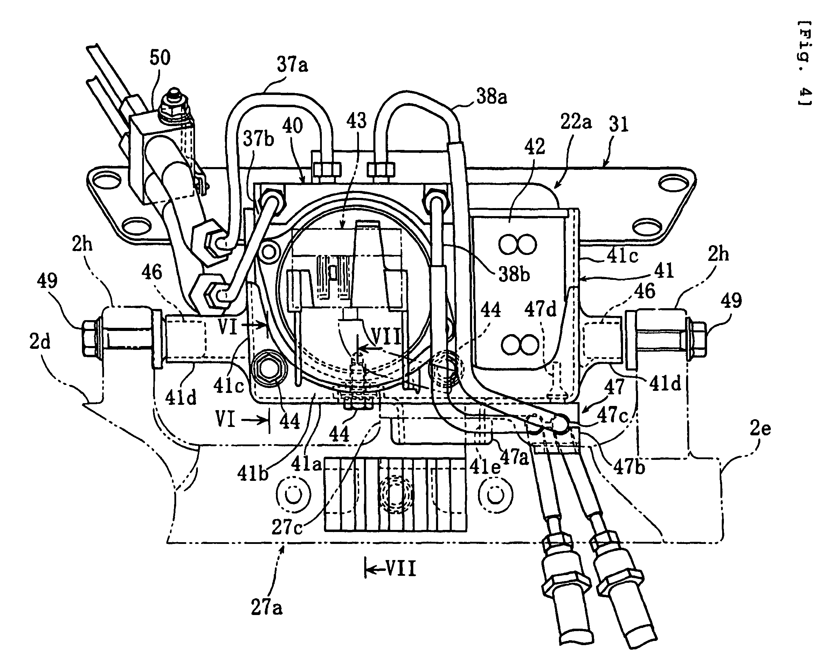

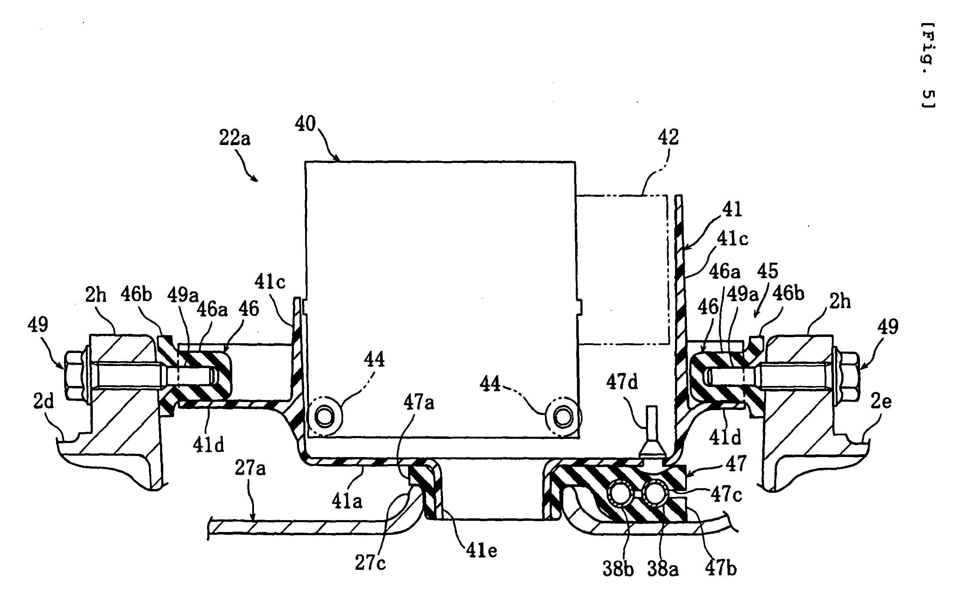

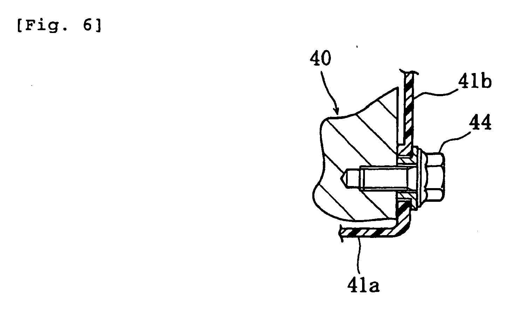

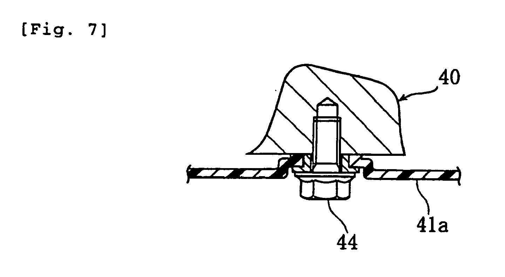

Figs. 1 to 7 are views illustrating a straddle-type vehicle, such as a motorcycle, according to an embodiment. In general, a straddle-type vehicle has a body frame and a seat on which a rider can be seated straddling the body frame when being seated. In addition, front and rear, and left and right referred to in descriptions of the embodiment mean front and rear, and left and right as seen in a state of being seated on a seat unless otherwise specified.

In the drawings, the reference numeral 1 denotes a motorcycle, the motorcycle 1 having the following outline construction. A head pipe 2a positioned at a front end of a body frame 2 supports a front fork 3 to make the same steerable left and right.

A front wheel 4 is journaled at a lower end of the front fork 3, and an upper portion of the front wheel 4 is covered by a front fender 5, the front fender 5 being mounted to a lower portion of the front fork 3.

Also, the front fork 3 has a headlight device 6 arranged on an upper portion thereof and has a steering handle 7 fixed at an upper end thereof. A circular-shaped meter 11 including a speedometer, a tachometer, etc. is mounted to the headlight device 6 to be positioned forwardly of the steering handle 7.

Also, the body frame 2 has an engine unit 8 suspended by a front suspension bracket 9, a central suspension bracket 10, and a rear end lower portion of the body frame 2. An intake device 12 and an exhaust device 13 are connected to the engine unit 8 and a radiator device 14 is arranged forwardly of the engine unit 8.

A frame cover 15 arranged on a front portion of the body frame 2 covers the intake device 12 from above and an indicator device 16 representative of a vehicular state is arranged on the frame cover 15.

Also, a side stand 21 is arranged on a left wall lower portion of the engine unit 8 to have the motorcycle 1 uprising in a state of being a little inclined leftward.

Furthermore, a rear end lower portion of the body frame 2 supports a rear arm 17 to enable the same to swing vertically and a rear wheel 18 is journaled at a rear end of the rear arm 17. The rear wheel 18 and the front wheel 4 are braked by a hydraulic brake device 22.

A rear-wheel suspension 19 is arranged between the rear arm 17 and the body frame 2, the rear-wheel suspension 19 comprising a remote type operating characteristics adjustment mechanism 25.

A fuel tank 20 is arranged above the rear-wheel suspension 19. A hydraulic control unit 22a of the brake device 22 is arranged obliquely forwardly of the fuel tank 20.

A straddle-type main seat 23a is arranged to cover upper portions of the hydraulic control unit 22a and the fuel tank 20, and a rear fender 24 that covers the rear wheel 18 from above is arranged below a tandem seat 23b arranged rearwardly of the main seat 23a.

The body frame 2 includes the head pipe 2a, a front frame 2c extending rearward and obliquely downward to a substantially central portion thereof in a longitudinal direction from the head pipe 2a, a rear arm bracket 2b extending downward from a rear end of the front frame 2c, and a rear frame 26 extending rearward and obliquely upward from an intermediate portion of the front frame 2c.

The front frame 2c includes a first front frame member 2d extending rearward from the head pipe 2a while diverging leftward (one side) in a vehicle width direction, and a second front frame member 2e extending rearward while diverging rightward (the other side).

The rear arm bracket 2b includes a first rear arm bracket member 2f being continuous to the first front frame member 2d and extending downward, and a second rear arm bracket member 2g being continuous to the second front frame member 2e and extending downward.

The rear frame 26 includes a first rear frame member 26a arranged leftward (one side) in the vehicle width direction to extend rearward from the first front frame member 2d, and a second rear frame member 26b arranged rightward (the other side) to extend rearward from the second front frame member 2e.

The first rear frame member 26a and the second rear frame member 26b are bolted and fixed to upper boss portions 2h, 2h formed on rear end surfaces of the first front frame member 2d and the second front frame member 2e.

Also, the rear frame 26 includes a first seat stay member 26c and a second seat stay member 26d, which are bolted and fixed to lower boss portions 2i, 2i formed at rear ends of the first rear arm bracket member 2f and the second rear arm bracket member 2g to extend obliquely upward from the lower boss portions 2i. Rear portions of the first seat stay member 26c and the first rear frame member 26a and rear portions of the second seat stay member 26d and the second rear frame member 26b are joined integrally.

Lower portions of the upper boss portions 2h of the first front frame member 2d and the second front frame member 2e are connected to each other by a cylindrical-shaped upper cross member 27a extending in the vehicle width direction. Also, upper portions of the lower boss portions 2i of the first rear arm bracket member 2f and the second rear arm bracket member 2g are connected to each other by a cylindrical-shaped lower cross member 27b extending in the vehicle width direction.

The intake device 12 includes an air cleaner 28 arranged between the first front frame member 2d and the second front frame member 2e to filter an air to the engine unit 8, and left and right intake ducts 29, 29 arranged outwardly of the first front frame member 2d and the second front frame member 2e of the air cleaner 28 in the vehicle width direction to supply a travel wind, which is introduced from the front, to the air cleaner 28.

A battery 30 is arranged rearwardly of and in the vicinity of the air cleaner 28 between the first front frame member 2d and the second front frame member 2e. The battery 30 is mounted to a band-shaped reinforcement plate 31 mounted to bridge the first front frame member 2d and the second front frame member 2e. Respective joining terminals 30a, 30a of the battery 30 are arranged to be exposed outside upon removal of the main seat 23a.

An ECU 33 described later is arranged above the battery 30, the ECU 33 being arranged between the air cleaner 28 and the frame cover 15.

The fuel tank 20 is arranged in a space surrounded by the first rear frame member 26a, the second rear frame member 26b, the first seat stay member 26c, and the second seat stay member 26d.

The brake device 22 includes a front-wheel master cylinder (not shown) that generates hydraulic pressure when a brake lever (not shown) is operated, a front-wheel brake caliper 35 supplied with the hydraulic pressure, a rear-wheel master cylinder (not shown) that generates hydraulic pressure when a brake pedal (not shown) is operated, and a rear-wheel brake caliper 36 supplied with the hydraulic pressure (see Fig. 1).

The brake device 22 includes the hydraulic control unit 22a that intermittently supplies hydraulic pressure to the front wheel 4 and the rear wheel 18 when the front wheel 4 and the rear wheel 18 are locked upon braking, and the ECU 33 that controls the operation of the hydraulic control unit 22a on the basis of detection values from a front-wheel rotating speed sensor 4a arranged on the front wheel 4 and a rear-wheel rotating speed sensor 18a arranged on the rear wheel 18.

The brake device 22 includes a first front-wheel hydraulic pressure secondary pipe 37a for communication between the hydraulic control unit 22a and the front-wheel brake caliper 35, a second front-wheel hydraulic pressure secondary pipe 37b for communication between the hydraulic control unit and the front-wheel master cylinder, a first rear-wheel hydraulic pressure secondary pipe 38a for communication between the hydraulic control unit 22a and the rear-wheel brake caliper 36, and a second rear-wheel hydraulic pressure secondary pipe 38b for communication between the hydraulic control unit and the rear-wheel master cylinder.

The first front-wheel hydraulic pressure secondary pipe 37a and the second front-wheel hydraulic pressure secondary pipe 37b are laid forward along an inside of the first front frame member 2d from the hydraulic control unit 22a. Also, the first rear-wheel hydraulic pressure secondary pipe 38a and the second rear-wheel hydraulic pressure secondary pipe 38b pass between the hydraulic control unit 22a and the upper cross member 27a from the hydraulic control unit 22a to extend forward, then extend rearwardly downward goring round the upper cross member 27a, and then are laid rearward along an inside of the second rear arm bracket member 2g.

A length, along which the first front-wheel hydraulic pressure secondary pipe 37a and the second front-wheel hydraulic pressure secondary pipe 37b are laid, is set to be substantially equal to or longer than a length, along which the first rear-wheel hydraulic pressure secondary pipe 38a and the second rear-wheel hydraulic pressure secondary pipe 38b are laid.

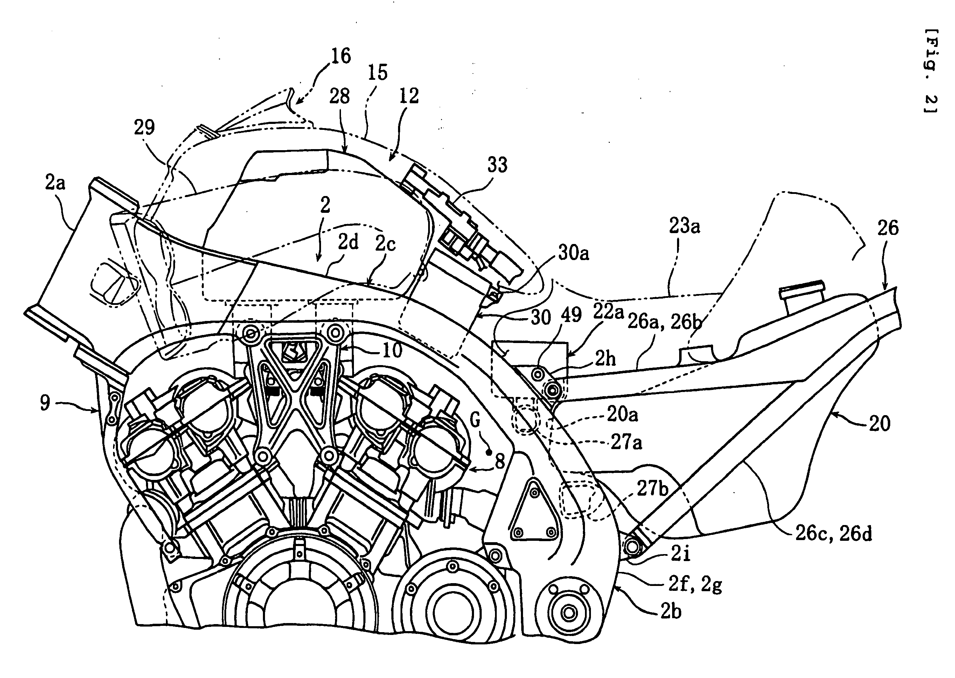

The hydraulic control unit 22a is arranged in the vicinity of the upper boss portions 2h where the front frame 2c and the rear frame 26 are connected to each other. More specifically, the hydraulic control unit is arranged between the first front frame member 2d and the second front frame member 2e and just above and centrally of the upper cross member 27a in the vehicle width direction. Thereby, the hydraulic control unit 22a is positioned above and in the vicinity of a center G of gravity of a vehicle body (see Fig. 2).

The battery 30 is positioned forwardly of the hydraulic control unit 22a and the fuel tank 20 is positioned rearwardly. A front wall 20a of the fuel tank 20 is extended to a position, in which it overlaps a lower portion of the hydraulic control unit 22a a little.

The hydraulic control unit 22a includes a unit body 40 having therewithin integrally a hydraulic pump that supplies hydraulic pressure to the front wheel 4 via the first front-wheel hydraulic pressure secondary pipe 37a and the second front-wheel hydraulic pressure secondary pipe 37b and supplies hydraulic pressure to the rear wheel 18 via the first rear-wheel hydraulic pressure secondary pipe 38a and the second rear-wheel hydraulic pressure secondary pipe 38b, an electric motor (not shown), respective solenoid valves that makes the hydraulic pressure intermittent, and a holding member 41 that holds the unit body 40.

A coupler 42 connected to the ECU 33 through a harness (not shown) is arranged on the right side of the unit body 40 and a fuse box 43 is arranged on a rear side thereof.

The holding member 41 is in the form of a box made of a resin, opened upward, and including a bottom wall 41a, front and rear walls 41b, 41b, and left and right walls 41c, 41c. The unit body 40 is mounted to the holding member 41 by left and right lock bolts 44, 44 inserted from the rear and a lock bolt 44 inserted from under.

The holding member 41 is mounted to the body frame 2 through an elastic member 45 made of rubber. The elastic member 45 includes left and right, upper elastic members 46, 46 that restrict upward movement of the holding member 41, and a lower elastic member 47 that restricts downward movement of the holding member 41, and has the following construction.

Support bolts 49, 49 inserted from outwardly laterally are fixed to left and right, upper boss portions 2h of the first front frame member 2d and the second front frame member 2e. The left and right support bolts 49 comprise a support portion 49a projecting inward from the upper boss portion 2h and the upper elastic members 46 are mounted to the left and right support portions 49a.

The upper elastic members 46 comprise a bottomed and cylindrical-shaped body portion 46a mounted to the support portion 49a and a flange portion 46b formed on an outer opened edge of the body portion 46a and interposed between the holding member 41 and the upper boss portion 2h to prevent interference between the both.

Upwardly opened, half cylindrical-shaped, left and right receiver portions 41 d, 41d are formed on the left and right walls 41 c, 41 c of the holding member 41 to project outward in the vehicle width direction. The upper elastic members 46 are arranged in the left and right receiver portions 41d whereby the left and right, upper elastic members 46 restrict longitudinal and upward movements of the holding member 41.

An upwardly projecting, cylindrical-shaped load bearing portion 27c is formed centrally of the upper cross member 27a in the vehicle width direction.

Also, a downwardly projecting, cylindrical-shaped insert 41e is formed on the bottom wall 41a of the holding member 41, the insert 41e being inserted into the load bearing portion 27c with the lower elastic member 47 therebetween. Thereby, the lower elastic member 47 inhibits the holding member 41 from moving in a longitudinal direction, in the vehicle width direction, and in a downward direction, and the upper cross member 27a supports the hydraulic control unit 22a through the lower elastic member 47.

The lower elastic member 47 includes a cylindrical-shaped boss portion 47a that abuts against an opened edge and an inner peripheral surface of the load bearing portion 27c, and a clamp portion 47b being contiguous to the cylindrical-shaped boss portion 47a to extend rightward in the vehicle width direction. Formed on the clamp portion 47b is a positioning projection 47d extending through the bottom wall 41 a of the holding member 41.

The clamp portion 47b includes slits 47c, through which the first rear-wheel hydraulic pressure secondary pipe 38a and the second rear-wheel hydraulic pressure secondary pipe 38b are inserted, whereby the first rear-wheel hydraulic pressure secondary pipe 38a and the second rear-wheel hydraulic pressure secondary pipe 38b are interposed by the upper cross member 27a and the hydraulic control unit 22a with the clamp portion 47b therebetween.

In addition, the reference numeral 50 denotes a mouth ring for connection of the first front-wheel hydraulic pressure secondary pipe 37a and the second front-wheel hydraulic pressure secondary pipe 37b to a rubber hose portion and a steel pipe portion.

According to the embodiment, since the hydraulic control unit 22a that makes supply of hydraulic pressure to the front wheel 4 and the rear wheel 18 intermittent is arranged in the vicinity of the upper boss portions 2h where the front frame 2c and the rear frame 26 are connected to each other, the hydraulic control unit 22a being a heavy item will be positioned near to and above the center G of gravity of a vehicle body, thus enabling making a weight balance of the vehicle body favorable.

According to the embodiment, since the fuel tank 20 is arranged between the first rear frame 26a and the second rear frame member 26b and positioned rearwardly of the hydraulic control unit 22a, it is possible to arrange the hydraulic control unit 22a and the fuel tank 20, which constitute heavy items, close to the center G of gravity of a vehicle body in a well-balanced manner.

According to the embodiment, since the battery 30 is arranged between the first front frame member 2d and the second front frame member 2e and forwardly of the hydraulic control unit 22a, it is possible to arrange the hydraulic control unit 22a and the battery 30, which constitute heavy items, close to the center G of gravity of a vehicle body in a well-balanced manner in the longitudinal direction.

Since the hydraulic control unit 22a is mounted to the first front frame member 2d and the second front frame member 2e, the first front frame member 2d and the second front frame member 2e, which are high in stiffness, can support the hydraulic control unit 22a, thus enabling improving the hydraulic control unit 22a in support stiffness.

Also, since the hydraulic control unit 22a is mounted just above the upper cross member 27a, which connects between the first front frame member 2d and the second front frame member 2e, it is possible to mount the hydraulic control unit 22a from above while heightening the hydraulic control unit 22a in support stiffness, thus enabling improving the quality of assembling.

According to the embodiment, since the unit body 40 of the hydraulic control unit 22a is held by the holding member 41 and the holding member 41 is mounted to the body frame 2, it is possible to heighten the holding member 41 in support stiffness.

Since the holding member 41 is mounted to the body frame 2 with the left and right, upper elastic members 46, 46 and the lower elastic member 47 therebetween, it is possible to inhibit vibrations from the road surface and the engine unit 8 from being transmitted to the hydraulic control unit 22a.

According to the embodiment, since the left and right, upper elastic members 46 restrict upward movement of the holding member 41 and the lower elastic member 47 restricts downward movement of the holding member 41, it is possible to efficiently absorb vertical vibrations acting on the hydraulic control unit 22a.

Also, since the left and right, upper elastic members 46 restrict movements of the holding member 41 in the longitudinal direction and the lower elastic member 47 restricts movements of the holding member 41 in the longitudinal direction and in the vehicle width direction, it is possible to efficiently absorb vibrations acting on the hydraulic control unit 22a in the longitudinal direction and in the vehicle width direction.

According to the embodiment, since the clamp portion 47b is formed integrally with the lower elastic member 47 and the first rear-wheel hydraulic pressure secondary pipe 38a and the second rear-wheel hydraulic pressure secondary pipe 38b are interposed by the clamp portion 47b, it is possible to absorb vibrations of the piping due to the intermittent action of hydraulic pressure without the provision of a separate member.

According to the embodiment, since a length, along which the first front-wheel hydraulic pressure secondary pipe 37a and the second front-wheel hydraulic pressure secondary pipe 37b are laid, is made equal to or longer than a length, along which the first rear-wheel hydraulic pressure secondary pipe 38a and the second rear-wheel hydraulic pressure secondary pipe 38b are laid, it is possible to make balance of piping on the front wheel 4 and the rear wheel 18 favorable and hence to heighten a feeling of operation at the time of braking operation.

In addition, while the embodiment been described taking a motorcycle as an example, the present teaching is also applicable to motor tricycles, motor four-wheel cars on which a straddle-type seat is mounted, straddle-type vehicles for terrain traveling.

The description above discloses (among others) an embodiment of a straddle-type vehicle comprising a body frame, a front wheel supported on the body frame to be made steerable left and right, a rear wheel supported on the body frame to be able to swing vertically, and a hydraulic brake device for braking of the front wheel and the rear wheel, and wherein the body frame includes a front frame extending rearward and obliquely downward to a substantially central portion thereof in a longitudinal direction from a front end of the body frame, and a rear frame extending rearward from an intermediate portion of the front frame, the brake device includes a hydraulic control unit that intermittently supplies hydraulic pressure to the wheels when the wheels are locked upon braking, and the hydraulic control unit is arranged in the vicinity of a connection of the front frame and the rear frame of the body frame.

Preferably, the rear frame includes a first rear frame member arranged on one side in a vehicle width direction and a second rear frame member arranged on the other side, the straddle-type vehicle further comprising a fuel tank arranged between the first rear frame member and the second rear frame member as viewed in plan view, and wherein the fuel tank is arranged rearwardly of the hydraulic control unit.

Further, preferably the front frame includes a first front frame member arranged on one side in a vehicle width direction and a second front frame member arranged on the other side, the straddle-type vehicle further comprising a battery arranged between the first front frame member and the second front frame member, and wherein the battery is arranged forwardly of the hydraulic control unit.

Further, preferably the front frame includes a first front frame member arranged on one side in a vehicle width direction and a second front frame member arranged on the other side, and the hydraulic control unit is mounted to the first front frame member and the second frame member.

Further, preferably a cross member for connection of the first frame member and the second frame member is provided, and the hydraulic control unit is mounted to the first front frame member and the second frame member above the cross member.

Further, preferably the hydraulic control unit includes a unit body that makes hydraulic pressure intermittent, and a holding member that holds the unit body, and the holding member is mounted to the body frame.

Further, preferably the holding member is mounted to the body frame through an elastic member.

Further, preferably the elastic member includes a first elastic member that restricts upward movement of the holding member, and a second elastic member that restricts lower movement of the holding member.

Further, preferably the second elastic member is structured to restrict movement of the holding member in a vehicle width direction.

Further, preferably the elastic member clamps a hydraulic pipe connected to the unit body.

Further, preferably the brake device includes a front-wheel hydraulic pressure secondary pipe for communication between the hydraulic control unit and a front-wheel brake caliper, and a rear-wheel hydraulic pressure secondary pipe for communication between the hydraulic control unit and a rear-wheel brake caliper, and the front-wheel hydraulic pressure secondary pipe is longer than the rear-wheel hydraulic pressure secondary pipe.

In order to provide a straddle-type vehicle capable of making a weight balance of a vehicle body favorable in the case where a hydraulic control unit is arranged on a body frame, a preferred embodiment is suggested, wherein a hydraulic control unit 22a is arranged in the vicinity of a connection of a front frame 2c of a body frame 2 and a rear frame 26.

## Claims

1. Straddle-type vehicle comprising:
a fuel tank (20),
a battery (30),
a body frame (2) including a front frame (2c) and a rear frame (26) extending in vehicle moving direction rearwardly from the front frame (2c), and a hydraulic brake device (22) configured to brake at least one wheel (4,18) of the straddle-type vehicle, the hydraulic brake device (22) including a hydraulic control unit (22a) that is configured to intermittently supply hydraulic pressure to the wheel (4,18) when the wheel (4,18) is locked upon braking, wherein
the hydraulic control unit (22a) is arranged in the vicinity of a connection of the front frame (2c) and the rear frame (26) of the body frame (2),
**characterized in that**
said fuel tank (20) is arranged in vehicle moving direction rearwardly of the hydraulic control unit (22a) and said battery (30) is arranged in vehicle moving direction forwardly of the hydraulic control unit (22a).

2. Straddle-type vehicle according to claim 1, **characterized in that** the front frame (2c) extends in vehicle moving direction rearwardly and obliquely downward to a substantially central portion thereof in a longitudinal direction from a front end of the body frame (2), and/or the rear frame (26) extends rearward from an intermediate portion of the front frame (2c).

3. Straddle-type vehicle according to claim 1 or 2, **characterized in that** a front wheel (4) is supported on the body frame (2) to be made steerable left and right, a rear wheel (18) is supported on the body frame (2) to be able to swing vertically, and the hydraulic brake device (22) is configured to brake the front wheel (4) and the rear wheel (18).

4. Straddle-type vehicle according to one of the claims 1 to 3, **characterized in that** the rear frame (26) includes a first rear frame member (26a) arranged on one side in vehicle width direction and a second rear frame member (26b) arranged on the other side, and the fuel tank (20) is arranged between the first rear frame member (26a) and the second rear frame member (26b) as viewed in plan view.

5. Straddle-type vehicle according to one of claims 1 to 4, **characterized in that** the front frame (2c) includes a first front frame member (2d) arranged on one side in vehicle width direction and a second front frame member (2e) arranged on the other side.

6. Straddle-type vehicle according to claim 5, **characterized in that** the battery (30) is arranged between the first front frame member (2d) and the second front frame member (2e).

7. Straddle-type vehicle according to claim 5 or 6, **characterized in that** the hydraulic control unit (22a) is mounted to the first front frame member (2d) and/or the second frame member (2e), and a cross member (27a) connects the first front frame member (2d) and the second front frame member (2e), wherein the hydraulic control unit (22a) is mounted to the first front frame member (2d) and the second front frame member (2e) above the cross member (7a).

8. Straddle-type vehicle according to one of claims 1 to 7, **characterized in that** the hydraulic control unit (22a) is mounted to the body frame (2) by means of at least one elastic member (45).

9. Straddle-type vehicle according to claim 8, **characterized in that** the hydraulic control unit (22a) includes a unit body (40) configured to make hydraulic pressure intermittent, and a holding member (41) holding the unit body (40), the holding member (41) being mounted to the body frame (2) by means of the at least one elastic member (45).

10. Straddle-type vehicle according to claim 8 or 9, **characterized in that** the elastic member (45) includes a first elastic member (46) configured to restrict upward movement of the hydraulic control unit (22a) of the holding member (41), and/or a second elastic member (47) configured to restrict lower movement of the hydraulic control unit (22a) of the holding member (41).

11. Straddle-type vehicle according to claim 10, **characterized in that** the second elastic member (47) is structured to restrict movement of the hydraulic control unit (22a) of the holding member (41) in vehicle width direction.

12. Straddle-type vehicle according to one of claims 8 to 11, **characterized in that** the elastic member (45) clamps at least one hydraulic pipe which is connected to the hydraulic control unit (22a) connected to the unit body (40).

13. Straddle-type vehicle according to one of claims 3 to 12, **characterized in that** the hydraulic brake device (22) includes a front-wheel hydraulic pressure pipe (37a,37b) for communication between the hydraulic control unit (22a) and a front-wheel brake caliper (35), and a rear-wheel hydraulic pressure pipe (38a,38b) for communication between the hydraulic control unit (22a) and a rear-wheel brake caliper (36), wherein the front-wheel hydraulic pressure pipe (37a,37b) is substantially of the same length or longer than the rear-wheel hydraulic pressure pipe (38a,38b).

## Patentansprüche

1. Fahrzeug vom Grätschsitz- Typ, aufweisend:
einen Kraftstofftank (20),
eine Batterie (30),
einen Karosserierahmen (2), enthaltend einen vorderen Rahmen (2c) und einen
hinteren Rahmen (26), der sich in der Bewegungsrichtung des Fahrzeuges von dem vorderen Rahmen (2c) nach hinten erstreckt, und eine hydraulische Bremsvorrichtung (22), konfiguriert, zumindest ein Rad (4, 18) des Fahrzeuges vom Grätschsitz-Typ zu bremsen, wobei die hydraulische Bremsvorrichtung (22) eine hydraulische Steuerungseinheit (22a) enthält, die konfiguriert ist, intermittierend einen hydraulischen Druck zu dem Rad (4, 18) zuzuführen, wenn das Rad (4, 18) während des Bremsens blockiert ist, wobei
die hydraulische Steuerungseinheit (22a) in der Nähe einer Verbindung des vorderen Rahmens (2c) und des hinteren Rahmens (26) des Karosserierahmens (2) angeordnet ist,
**dadurch gekennzeichnet, dass**
der Kraftstofftank (20) in der Bewegungsrichtung des Fahrzeuges hinter der hydraulischen Steuerungseinheit (22a) angeordnet ist und die Batterie (30) in der Bewegungsrichtung des Fahrzeuges vor der hydraulischen Steuerungseinheit (22a) angeordnet ist.

2. Fahrzeug vom Grätschsitz- Typ nach Anspruch 1, **dadurch gekennzeichnet, dass** sich der vordere Rahmen (2c) in der Bewegungsrichtung des Fahrzeuges nach hinten und schräg nach unten zu einem im Wesentlichen zentralen Abschnitt desselben in einer Längsrichtung von einem vorderen Ende des Karosserierahmens (2) erstreckt, und / oder sich der hintere Rahmen (26) nach hinten von einem Zwischenabschnitt des vorderen Rahmens (2c) erstreckt.

3. Fahrzeug vom Grätschsitz- Typ nach Anspruch 1 oder 2, **dadurch gekennzeichnet, dass** ein Vorderrad (4) an dem Karosserierahmen (2) gelagert ist, um nach links und rechts steuerbar zu sein, ein Hinterrad (18)an dem Karosserierahmen (2) gelagert ist, um vertikal schwenkbar zu sein, und die hydraulische Bremsvorrichtung (22) konfiguriert ist, das Vorderrad (4) und das Hinterrad (18) zu bremsen.

4. Fahrzeug vom Grätschsitz- Typ nach einem der Ansprüche 1 bis 3, **dadurch gekennzeichnet, dass** der hintere Rahmen (26) enthält ein erstes hinteres Rahmenteil (26a), angeordnet auf einer Seite in der Richtung der Fahrzeugbreite, und ein zweites hinteres Rahmenteil (26b), angeordnet auf der anderen Seite, und wobei der Kraftstofftank (20) zwischen dem ersten hinteren Rahmenteil (26a) und dem zweiten hinteren Rahmenteil (26b) angeordnet ist, wenn in einer Draufsicht gesehen.

5. Fahrzeug vom Grätschsitz- Typ nach einem der Ansprüche 1 bis 4, **dadurch gekennzeichnet, dass** der vordere Rahmen (2c) ein erstes vorderes Rahmenteil (2d) enthält, angeordnet auf einer Seite in Richtung der Fahrzeugbreite, und ein zweites vorderes Rahmenteil (2e), angeordnet auf der anderen Seite.

6. Fahrzeug vom Grätschsitz- Typ nach Anspruch 5, **dadurch gekennzeichnet, dass** die Batterie (30) zwischen dem ersten vorderen Rahmenteil (2d) und dem zweiten vorderen Rahmenteil (2e) angeordnet ist.

7. Fahrzeug vom Grätschsitz- Typ nach Anspruch 5 oder 6, **dadurch gekennzeichnet, dass** die hydraulische Steuerungseinheit (22a) an dem ersten vorderen Rahmenteil (2d) und / oder dem zweiten Rahmenteil (2e) montiert ist, und ein Kreuzteil (27a) das erste vordere Rahmenteil (2d) und das zweite vordere Rahmenteil (2e) verbindet, wobei die hydraulische Steuerungseinheit (22a) an dem ersten vorderen Rahmenteil (2d) und dem zweiten vorderen Rahmenteil (2e) oberhalb des Kreuzteiles (7a) montiert ist.

8. Fahrzeug vom Grätschsitz- Typ nach einem der Ansprüche 1 bis 7, **dadurch gekennzeichnet, dass** die hydraulische Steuerungseinheit (22a) an dem Karosserierahmen (2) mittels zumindest eines elastischen Teils (45) montiert ist.

9. Fahrzeug vom Grätschsitz- Typ nach Anspruch 8, **dadurch gekennzeichnet, dass** die hydraulische Steuerungseinheit (22a) eine Körpereinheit (40) enthält, konfiguriert, den hydraulischen Druck intermittierend zu schaffen, und ein Halteteil (41), das die Körpereinheit (40) hält, wobei das Halteteil (41) an dem Karosserierahmen (2) mittels zumindest einem elastischem Teil (45) montiert ist.

10. Fahrzeug vom Grätschsitz- Typ nach Anspruch 8 oder 9, **dadurch gekennzeichnet, dass** das elastische Teil (45) enthält ein erstes elastisches Teil (46), konfiguriert, die Bewegung nach oben der hydraulischen Steuerungseinheit (22a) zu begrenzen und / oder ein zweites elastisches Teil (47), konfiguriert die Bewegung nach unten der hydraulischen Steuerungseinheit (22a) des Halteteils (41) zu begrenzen.

11. Fahrzeug vom Grätschsitz- Typ nach Anspruch 10, **dadurch gekennzeichnet, dass** das zweite elastische Teil (47) strukturiert ist, die Bewegung der hydraulischen Steuerungseinheit (22a) des Halteteils (41) in Richtung der Fahrzeugbreite zu begrenzen.

12. Fahrzeug vom Grätschsitz- Typ nach einem der Ansprüche 8 bis 11, **dadurch gekennzeichnet, dass** das elastische Teil (45) zumindest ein hydraulisches Rohr klemmt, das mit der hydraulischen Steuerungseinheit (22a), verbunden mit der Körpereinheit (40), verbunden ist.

13. Fahrzeug vom Grätschsitz- Typ nach einem der Ansprüche 3 bis 12, **dadurch gekennzeichnet, dass** die hydraulische Bremsvorrichtung (22) ein hydraulisches Vorderrad- Druckrohr (37a, 37b) zur Verbindung zwischen der hydraulischen Steuerungseinheit (22a) und einem Vorderrad- Bremsrachen (35), und ein hydraulisches Hinterrad- Druckrohr (38a, 38b) zur Übertragung zwischen der hydraulischen Steuerungseinheit (22a) und einem Hinterrad- Bremsrachen (36) enthält, wobei das hydraulische Vorderrad- Druckrohr (37a, 37b) im Wesentlichen von derselben Länge oder länger als das hydraulische Hinterrad- Druckrohr (38a, 38b) ist.

## Revendications

1. Véhicule du type à enfourcher, comprenant :
un réservoir de carburant (20),
une batterie (30),
un cadre (2) comprenant un cadre avant (2c) et un cadre arrière (26) qui s'étend vers l'arrière à partir du cadre avant (2c), dans le sens de déplacement du véhicule, et un dispositif de freinage hydraulique (22) conçu pour freiner au moins une roue (4, 18) du véhicule du type à enfourcher, le dispositif de freinage hydraulique (22) comprenant une unité de commande hydraulique (22a) qui est conçue pour fournir par intermittence une pression hydraulique à la roue (4, 18) quand celle-ci est bloquée lors du freinage, étant précisé
que l'unité de commande hydraulique (22a) est disposée près d'une liaison du cadre avant (2c) et du cadre arrière (26) du cadre (2),
**caractérisé en ce que** le réservoir de carburant (20) est disposé vers l'arrière de l'unité de commande hydraulique (22a), dans le sens de déplacement du véhicule, et la batterie (30) est disposée vers l'avant de ladite unité de commande hydraulique (22a), dans le sens de déplacement du véhicule.

2. Véhicule du type à enfourcher selon la revendication 1, **caractérisé en ce que** le cadre avant (2c) s'étend vers l'arrière, dans le sens de déplacement du véhicule, et en biais vers le bas vers une partie globalement centrale du véhicule dans un sens longitudinal à partir d'une extrémité avant du cadre (2), et/ou le cadre arrière (26) s'étend vers l'arrière à partir d'une partie intermédiaire du cadre avant (2c).

3. Véhicule du type à enfourcher selon la revendication 1 ou 2, **caractérisé en ce qu'**une roue avant (4) est supportée sur le cadre (2) pour pouvoir être dirigée vers la gauche et vers la droite, une roue arrière (18) est supportée sur le cadre (2) pour pouvoir osciller verticalement, et le dispositif de freinage hydraulique (22) est conçu pour freiner la roue avant (4) et la roue arrière (18).

4. Véhicule du type à enfourcher selon l'une des revendications 1 à 3, **caractérisé en ce que** le cadre arrière (26) comprend un premier élément de cadre arrière (26a) disposé sur un côté, dans le sens de la largeur du véhicule, et un second élément de cadre arrière (26b) disposé sur l'autre côté, et le réservoir de carburant (20) est disposé entre le premier élément de cadre arrière (26a) et le second élément de cadre arrière (26b), vu en plan.

5. Véhicule du type à enfourcher selon l'une des revendications 1 à 4, **caractérisé en ce que** le cadre avant (2c) comprend un premier élément de cadre avant (2d) disposé sur un côté, dans le sens de la largeur du véhicule, et un second élément de cadre avant (2e) disposé sur l'autre côté.

6. Véhicule du type à enfourcher selon la revendication 5, **caractérisé en ce que** la batterie (30) est disposée entre le premier élément de cadre avant (2d) et le second élément de cadre avant (2e).

7. Véhicule du type à enfourcher selon la revendication 5 ou 6, **caractérisé en ce que** l'unité de commande hydraulique (22a) est montée sur le premier élément de cadre avant (2d) et/ou sur le second élément de cadre (2e), et un élément transversal (27a) relie le premier élément de cadre avant (2d) et le second élément de cadre avant (2e), étant précisé que l'unité de commande hydraulique (22a) est montée sur le premier élément de cadre avant (2d) et sur le second élément de cadre avant (2e) au-dessus de l'élément transversal (7a).

8. Véhicule du type à enfourcher selon l'une des revendications 1 à 7, **caractérisé en ce que** l'unité de commande hydraulique (22a) est montée sur le cadre (2) à l'aide d'au moins un élément élastique (45).

9. Véhicule du type à enfourcher selon la revendication 8, **caractérisé en ce que** l'unité de commande hydraulique (22a) comprend un corps d'unité (40) conçu pour rendre la pression hydraulique intermittente, et un élément de fixation (41) qui fixe le corps d'unité (40), ledit élément de fixation (41) étant monté sur le cadre (2) à l'aide du ou des éléments élastiques (45).

10. Véhicule du type à enfourcher selon la revendication 8 ou 9, **caractérisé en ce que** l'élément élastique (45) comprend un premier élément élastique (46) conçu pour limiter le mouvement ascendant de l'unité de commande hydraulique (22a) de l'élément de fixation (41), et/ou un second élément élastique (47) conçu pour limiter le mouvement inférieur de l'unité de commande hydraulique (22a) de l'élément de fixation (41).

11. Véhicule du type à enfourcher selon la revendication 10, **caractérisé en ce que** le second élément élastique (47) est structuré pour limiter le mouvement de l'unité de commande hydraulique (22a) de l'élément de fixation (41) dans le sens de la largeur du véhicule.

12. Véhicule du type à enfourcher selon l'une des revendications 8 à 11, **caractérisé en ce que** l'élément élastique (45) serre au moins une conduite hydraulique qui est reliée à l'unité de commande hydraulique (22a) reliée au corps d'unité (40).

13. Véhicule du type à enfourcher selon l'une des revendications 3 à 12, **caractérisé en ce que** le dispositif de freinage hydraulique (22) comprend une conduite de pression hydraulique de roue arrière (37a, 37b) pour la communication entre l'unité de commande hydraulique (22a) et un étrier de frein de roue arrière (36), étant précisé que la conduite de pression hydraulique de roue avant (37a, 37b) est quasiment aussi longue ou plus longue que la conduite de pression hydraulique de roue arrière (38a, 38b).
